# EUROPEAN PATENT SPECIFICATION

(11) **EP 2 555 386 B1**
(45) Date of publication and mention of the grant of the patent: **25.06.2014**
(21) Application number: 11176159.9
(22) Date of filing: 01.08.2011
(51) Int. Cl.: H02K 1/27, H02K 7/18

(54) **Pole-locking device**
Stangensperrvorrichtung
Dispositif de blocage de pôle

(43) Date of publication of application: 06.02.2013
(73) Proprietor: Siemens Aktiengesellschaft, 80333 München (DE)
(72) Inventor: Andersen, Torben Peter, 2630 Taastrup (DK); Hansen, Alan, 2610 Rodovre (DK); Maroti, Stefan, 8600 Silkeborg (DK); Thaarup, Klaus, 2670 Greve (DK)

(56) References cited:
- EP-A1- 2 348 619
- JP-A- 6 237 547

## Description

The invention describes a pole-locking device, a field structure, and an electrical machine.

Permanent magnets are often used in large electrical machines such as motors or generators. Such an electrical machine comprises two basic components, namely a field for creating magnetic flux, and an armature for generating electromotive force and for carrying current crossing the field. The armature usually comprises conductive coils wrapped on a stator, while the field usually comprises magnets arranged on a rotor. The rotor can surround the stator, or vice versa, and the magnets and coils face each other across a narrow air-gap. In an electrical machine such as a small motor, only a few magnets need be mounted on the rotor. JP 6 237 547 A considers forming a type of frame to contain each magnet and securing the magnet by means of a spring. The established methods of loading or mounting permanent magnets onto the field (or 'field structure') of a large electrical machine are more complex and comprise various steps such as enclosing the individual permanent magnet poles in housings, and gluing the permanent magnet poles to the field (usually the rotor), wrapping the entire arrangement in fibreglass bandage or enclosing it in a vacuum bag, pumping resin into the bag and performing vacuum extraction to consolidate the permanent magnet poles to the rotor body. These methods are accompanied by various problems such as the extensive and therefore costly effort involved in securing the permanent magnets to the field. For example, when the magnets are glued to the field, the glue must be allowed to cure or set, adding to the overall assembly time. Furthermore, in case of a failure of a permanent magnet, the defective magnet must be removed and replaced, which is made difficult if a fibreglass or resin envelope must be opened and then resealed again, making repairs complicated and costly to carry out.

The permanent magnet poles - which can be several meters in length and correspondingly heavy - are usually already magnetized before they are mounted onto the field. Therefore, these can be strongly attracted to other permanent magnets of opposite polarity already in place on the field, or to other loose magnetic items such as tools or fasteners. Therefore, permanent magnets present a considerable safety hazard during the mounting procedure.

In an alternative magnet loading approach, the magnet poles and the field structure are shaped with complementary contours. For example, the field structure can be structured to have a plurality of slots into which magnet poles can be pushed. The poles and the slots are shaped so that a slot contains and holds a magnet pole. For example, a slot and a pole can have complementary dovetail or T-shaped contours. These advantageous contours allow the magnet pole to be held in the slot such that a radial movement of the magnet pole is limited. In this way, a magnet pole cannot "fall off" or slip sideways over the field structure, for example as a result of strong magnetic forces acting on it during the loading procedure. One end of such a slot usually terminates in the body of the rotor, while the other end is left open to allow the magnet pole to be inserted.

While the contours described above are effective at limiting some motion of the magnet poles in the slots, the problem of limiting an axial motion of a magnet pole remains. For various design reasons, the overall length of a magnet pole (which can comprise several magnet pole pieces) may be shorter than the field slot length, so that an "empty" slot portion remains. During operation of the electrical machine, a magnet pole might be displaced axially in its field slot, for example because of vibration of the machine, magnet attraction of other magnetic poles or parts, etc. As a result, a magnet pole may become displaced, or gaps might open between pole pieces of a magnet pole, so that the efficiency of the machine deteriorates. Known approaches to this problem involve arranging a custom-made plate, for example a steel plate, in the slot to fill the gap between the outer end of a magnet pole and the outer edge of the field structure, and screwing it into place. However, such manual interaction can be hazardous for the reasons given above. Furthermore, a large machine can easily have over a hundred field slots, so that such a manual step can be very time-consuming and therefore expensive.

It is therefore an object of the invention to provide a better way of limiting the movement of magnet poles on the field structure of an electrical machine, overcoming the problems mentioned above.

The object of the invention is achieved by the pole-locking device of claim 1, by the field structure of claim 12, and by the electrical machine of claim 14.

According to the invention, a pole-locking device for limiting the axial motion of a magnet pole held in a field slot of a field structure of an electrical machine comprises a spring-loaded element realised to exert a force on the magnet pole held in the field slot; a housing frame realised to retain the spring-loaded element in the field slot; and an anchor element realised to anchor the pole-locking device in the field slot.

An advantage of the pole-locking device according to the invention is that it can be inserted into a field slot without the need for any fasteners such as screws or bolts. Instead, the anchor element simply anchors the pole-locking device in the field slot so that the pole-locking device can simply be latched into place or unlatched again should the need arise. Furthermore, the pole-locking device can be inserted without requiring any manual interaction at all, for example in an automated loading process. Furthermore, since the pole-locking device comprises a spring-loaded element, the length of the pole-locking device can accommodate alterations in length of the magnet pole and/or of the pole-locking device itself, for example on account of thermal expansion. In this way, material fatigue or failure can be effectively avoided, in contrast to prior art methods. For example, a steel plate that is secured in the field slot to press against the magnet pole in order to hold it in place during operation may be associated with problems owing to thermal expansion. For example the steel plate can damage the magnet pole piece against which it is pressing, or the forces acting on the steel plate can cause a fastener to shear, so that the magnet pole is no longer effectively secured in the field slot. The pole-locking device according to the invention avoids these known problems, since the spring-loaded element allows such forces to be effectively absorbed, and no fasteners are required to hold it in place.

According to the invention, a field structure of an electrical machine comprises at least one field slot realised to accommodate a magnet pole, wherein a field slot comprises an engaging means shaped to accommodate an anchor element of a pole-locking device according to the invention.

According to the invention, an electrical machine comprises such a field structure, a magnet pole arranged in a field slot of the field structure, and a pole-locking device according to the invention, arranged such that the anchor element of the pole-locking device engages with the engaging means of the field slot.

An advantage of such an electrical machine is that the magnet poles can be easily and quickly serviced. For example, a damaged magnet pole can easily be removed for replacement, since the pole-locking device can be simply removed or unlatched from the field slot to allow access to the magnet pole. Once the magnet pole has been serviced and is in place again in the field slot, the pole-locking device can be simply inserted into the field slot and latched into place.

Particularly advantageous embodiments and features of the invention are given by the dependent claims, as revealed in the following description. Features described in the context of one claim category can apply equally to another claim category. Features of the different claim categories may be combined as appropriate to arrive at further embodiments.

As indicated above, the field of an electric machine can be stationary or it can rotate. However, particularly in electrical generators, the coils are arranged on a stator, and the magnets are arranged on a rotor. Therefore, without restricting the invention in any way, the terms "rotor" and "field structure" or "field" may be used interchangeably in the following. The rotor can be arranged in the interior of the stator, or vice versa, so that the magnets are separated from the coils by a narrow air gap. In the following, but without restricting the invention in any way, it may be assumed that the rotor is arranged around the stator, and that the magnets are arranged on an interior or inner concave surface of the rotor. For simplicity, in the following the terms "magnet pole pieces" or "magnet poles" may be referred to simply as "pole pieces" or "poles" respectively. Also, it may be assumed that the rotor has an essentially cylindrical shape, and that a field slot is arranged essentially longitudinally on the rotor, i.e. essentially parallel to a longitudinal axis or axis of rotation of the rotor. In the following, without limiting the invention in any way, it may be assumed that the electrical machine comprises a generator of a wind turbine.

The anchor element can be realised in any appropriate manner in order to engage in a secure way with some part of the rotor or rotor slot. For example, the anchor element can be realised to extend beyond an outer open end of the rotor slot so that it can be fastened to the outer edge of the rotor. However, such an arrangement might mean that the anchor element interferes with some other part of the electrical machine. For example, a brake disk is usually required to slow down the rotor's movement in a braking step, and such a brake disk is usually arranged to lie against the rotor at the side with the open rotor slot ends. Therefore, in a particularly preferred embodiment of the invention, the anchor element is realised to engage with a corresponding engaging means arranged in the field slot. In this way, no part of the pole-locking device needs to extend beyond the open rotor slot end, and therefore no part of the pole-locking device need interfere with the functionality of the brake disk. The anchor element serves as a fixed reference point relative to which the spring-loaded element can be compressed or decompressed. In other words, the spring-loaded element essentially comprises a cantilever spring, fixed at one end (the anchor end) and free to move towards or away from the fixed end.

A spring portion of the spring-loaded element is preferably free to move within the housing frame. Therefore, in a further preferred embodiment of the invention, the housing frame comprises an aperture shaped to accommodate a spring portion of the spring-loaded element such that the spring portion extends through the aperture. The spring portion of the spring-loaded element is then free to be compressed within the aperture. The spring portion preferably comprises a suitable type of compression spring such as a wave spring or a coil spring, etc.

The pole-locking device according to the invention is preferably realised to press against a part of a magnet pole arranged in the rotor slot, so that the magnet pole is prevented from slipping axially along the rotor slot towards its open end. Therefore, in a further preferred embodiment of the invention, the housing frame is realised to expose a magnet-side portion of the spring-loaded element, which magnet-side portion is shaped to contact a magnet pole. For example, the end of the spring-loaded element closest to the magnet pole can extend or protrude by a suitable distance from beyond the housing frame. Effectively, the spring portion of the spring-loaded element can then be compressed by this amount, which may be referred to as the "compression distance" in the following.

For a favourably robust realisation, the spring-loaded element is preferably realised as one piece, so that the anchor element, the spring portion, and the magnet-side portion are formed in a single manufacturing process such as casting or moulding.

For ease of handling of the pole-locking device and ease of insertion into a rotor slot, in a further preferred embodiment of the invention the housing frame is shaped according to a cross-section contour of the field slot. For example, if the rotor slot comprises a T-shaped cross-section for accommodating magnet poles with a complementary T-shaped cross-section, the housing frame can comprise lateral holding strips along the outer edges of the housing frame, which lateral holding strips are shaped to fit into grooves along the long sides of the rotor slot. With such a favourable housing frame shape, the pole-locking device is effectively prevented from falling out of the rotor slot into a space between the rotor and stator.

In an electrical machine such as a wind turbine generator, the stator and rotor are separated by only a narrow air-gap. It is very important that foreign bodies such as small parts are prevented from entering this air-gap, since the presence of such a foreign body might cause serious damage to the generator. Therefore, in a particularly preferred embodiment of the invention, the housing frame of the pole-locking device the housing frame comprises a retainer for retaining the spring portion in the aperture. The retainer can be shaped to contain or retain fragments of a broken spring portion, should the compression forces acting on the spring-loaded element during operation of the electrical machine result in its failure. The damaged pole-locking device can be removed by unlatching the pole-locking device from the rotor slot, and a replacement spring-loaded element can be inserted with a replacement housing frame, if necessary.

To allow a straightforward release of the pole-locking device from the rotor slot, in a preferred embodiment of the invention the anchor element comprises a first access opening for releasing the anchor element from the engaging means. The access opening can be shaped to accommodate a tool or apparatus used to release the latching mechanism of the anchor element. Since the pole-locking device can be locked tightly into place and the forces acting on the pole-locking device in its compressed state can be very large, an automated tool may be used to release a pole-locking device, or a tool which can absorb any rebound forces when the anchor element of the pole-locking device is released from the engaging means of the rotor slot.

To ensure that the pole-locking device is not inadvertently released or unlatched from the rotor slot, in a further preferred embodiment of the invention the housing frame comprises an anchor shield realised to shield the anchor element, and an anchor slit shaped to accommodate the anchor element in the housing frame, so that the housing frame effectively surrounds the anchor element as well.

Of course, the housing frame should not make it difficult to intentionally release or unlatch the pole-locking device. Therefore, in a further preferred embodiment of the invention, the anchor shield comprises a second access opening for providing access to the anchor element. Preferably, this second access opening is arranged in line with the first access opening of the anchor element, so that a tool can simply be inserted through both openings in order to lever the anchor element out of the engaging means.

The engaging means can comprise any suitably shaped portion of the rotor slot. For example, in a preferred embodiment of the invention, an engaging means comprises a recess formed in a floor of the field slot. This recess can be shaped to accommodate the anchor element in close-fitting manner.

Therefore, the engaging means and the anchor element preferably comprises complementary shapes.

To allow a certain degree of flexibility in choosing the lengths of the magnet poles, a rotor according to the invention preferably comprises more than one engaging means. For example, a row of three engaging means can be formed along a central longitudinal axis of the rotor slot, towards the open brake-disk side, so that three possibilities are open to the designers of the electrical machine. For example, pole pieces of a certain length can be used, so that when a magnet pole in placed in a rotor slot, a pole-locking device with a certain length can be used to secure that magnet pole in place. The length of a pole-locking device can be governed by the length of the spring-loaded element alone. In this way, one kind of housing frame can be combined with spring-loaded elements of different lengths, so that different empty rotor slot lengths can be filled by an appropriate combination of housing frame and spring-loaded element. The length of a spring-loaded element, in turn, can be governed be the length of the exposed magnet-side portion.

Since the pole-locking device serves to hold a magnet pole in place by exerting an axial force upon the magnet pole, in a further preferred embodiment of the invention the length of the spring-loaded element in a compressed state corresponds to a lock distance between an outer end of a magnet pole and an engaging means of the field slot. For example, for a wave spring with one or more folds and having a certain spring constant, the length of the magnet-side portion of the spring can be designed so that, when the spring portion of the spring-loaded element is not compressed, the overall length of the spring-loaded element is longer than the lock distance, and when the spring portion of the spring-loaded element is compressed, the overall length of the spring-loaded element corresponds to the lock distance. In this way, as soon as the pole-locking device is latched into place, the spring portion is compressed, so that an axial force is exerted on the magnet pole by the magnet side portion of the spring-loaded element.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a pole-locking device according to an embodiment of the invention;
Fig. 2 shows a spring-loaded element and a housing frame of the pole-locking device of Fig. 1;
Fig. 3 shows the pole-locking device of Fig. 1 in place in a rotor slot of a rotor according to the invention;
Fig. 4 shows a cross-section of the arrangement of Fig. 4;
Fig. 5 shows a rotor according to an embodiment of the invention;
Fig. 6 shows a spring-loaded element and a housing frame of the pole-locking device according to a second embodiment of the invention;
Fig. 7 shows the pole-locking device of Fig. 6 in its assembled state.

In the drawings, like reference numbers refer to like objects throughout. Objects in the diagrams are not necessarily drawn to scale. In particular, the relative length and width of a rotor slot or a magnet assembly may not correspond to those of actual embodiments of these elements, and are only rendered thus for clarity.

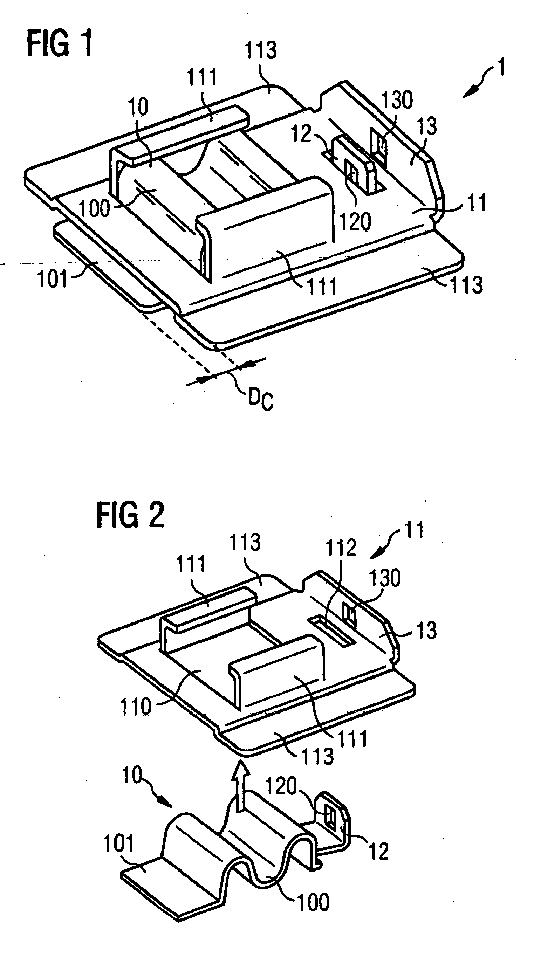

Fig. 1 shows a pole-locking device 1 according to an embodiment of the invention. The pole-locking device 1 comprises a spring-loaded element 10 arranged under a housing frame 11 such that a spring portion 100 of the spring-loaded element 10 protrudes through an aperture 110 of the housing frame 11; an anchor element 12 protrudes through an anchor element opening 112, and a magnet-side portion 101 is exposed at the other end of the housing frame 11. The housing frame 11 also comprises retainers 111 that extend around the spring portion 100 of the spring-loaded element 10, to prevent fragments of the spring portion 100 from falling into an air-gap should the spring portion 100 of the spring-loaded element 10 fracture or break. To prevent the pole-locking device 1 from being inadvertently unlatched from its rotor slot, the housing frame 11 comprises an anchor shield 13 extending along the side of the housing frame 11 outside the anchor element 12. To allow the pole-locking device 1 to be removed from the rotor slot, the anchor shield 13 comprises an access opening 13 that is in line with an access opening 120 in the anchor element 12. A suitably-shaped tool can be inserted into the access openings 130, 120 to lever the anchor element 12 out of an engaging means of the rotor slot. The amount by which the spring-loaded element 10 can be compressed, i.e. the compression distance D_{C}, is governed by the amount by which the magnet-side portion 101 extends beyond the housing frame 11.

Fig. 2 shows a spring-loaded element 10 and a housing frame 11 of the pole-locking 1 device of Fig. 1. The spring-loaded element 10 is shown to comprise a magnet-side portion 101 and an anchor element 12, joined by a spring portion 100, which in this embodiment comprises a wave spring 100 with a double wave. The spring portion 100 can be formed of one piece using a suitable material such as steel. The housing frame 11 is shown to comprise an aperture 110 shaped to accommodate the spring portion 100 and retainers 111 to partially enclose the spring portion 100, an anchor element opening 112 shaped to accommodate the anchor element 12, and an access opening 130 for allowing access to the anchor element 12. To ensure a good fit when the pole-locking device 1 is inserted into a rotor slot, the housing frame 11 comprises a lateral holding strip 113 along the sides of the housing frame 11 to match corresponding grooves in a T-shaped rotor slot. Of course, for a different rotor slot shape, an embodiment of the housing frame 11 can have correspondingly different lateral holding elements, for example angled holding elements to fit into a dove-tail groove.

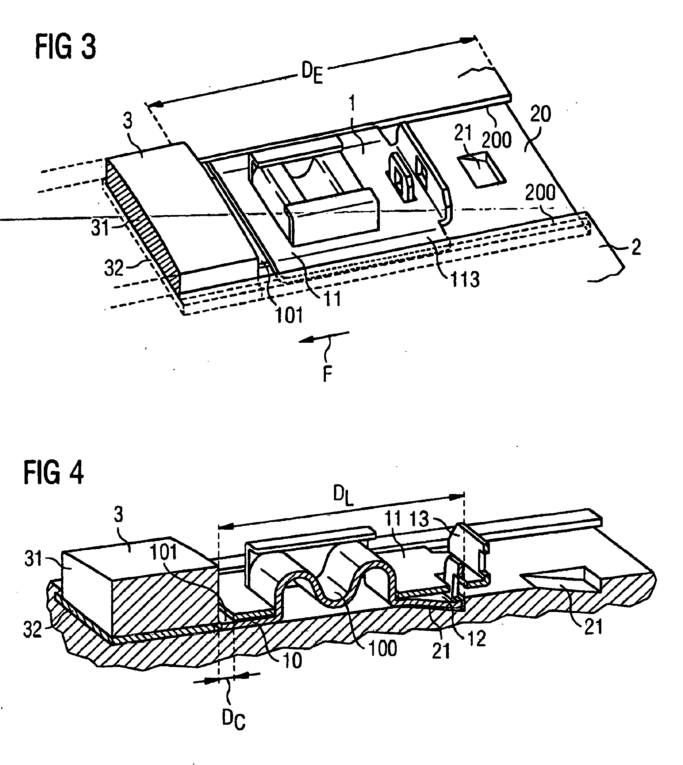

Fig. 3 shows the pole-locking device 1 of Fig. 1 in place in a rotor slot 20 of a rotor 2 according to the invention. A magnet pole 3 comprising a magnet pole piece 31 mounted on a base plate 32, has been inserted into the rotor slot 20 in a preceding loading step. A portion of the rotor slot 20 remains "empty" over a length D_{E}. The rotor slot 20 comprises a number of engaging means 21 to allow a pole-locking device 1 to be latched into place. Here, a pole-locking device 1 has been inserted into the rotor slot 20, and the lateral holding strips 113 of the pole-locking device 1 fit securely into grooves 200 along the sides of the rotor slot 20. The pole-locking device 1 is inserted into the rotor slot 20 to a distance such that the magnet side portion 101 presses against the magnet pole 3, for example against the base plate 32 of the magnet pole 3, and such that the anchor element 12 latches into one of the engaging means 21. To ensure a secure fit, the base plate 32 of the magnet pole 3 can be realised to be slightly shorter than the magnet pole 3 itself, allowing the magnet-side portion 101 of the pole-locking device 1 to fit 'under' the magnet pole 3. Once the pole-locking device 1 is latched into place, it is prevented from moving axially along the rotor slot 20. Furthermore, on account of the compression of the spring portion 100, the magnet side portion 101 of the spring-loaded element 10 exerts an axial force F on the magnet pole 3, ensuring that this cannot slip or be displaced in the rotor slot 20 during operation of the electrical machine. The pole-locking device 1 can be inserted into the rotor slot 20 using the same machinery or apparatus that was used to push the magnet pole 3 into the rotor slot 20, since the relevant dimensions of the pole-locking device 1, namely its width and height, are essentially the same as those of the magnet pole 3.

Fig. 4 shows a cross-section of the arrangement of Fig. 4. This diagram shows more clearly how the anchor element 12 of the spring-loaded element 10 fits into the engaging means 21 of the rotor slot 20. The diagram also shows clearly how the magnet side portion 101 presses against the base plate 32 of the magnet pole 3, so that the magnet pole piece 31 itself (usually comprising a protective housing arranged around the corrosive and brittle magnetic material) is not subject to damage. The magnet pole 3 can compress the spring-loaded element 10 by a compression distance DC, given by the amount by which the magnet-side portion 101 extends beyond the housing frame 11. The pole-locking device 1 is chosen such that a length of the spring-loaded element in a compressed state, measured from the magnet-side portion 101 to the anchor element 12, is sufficient to cover a lock distance D_{L} measured from an outer end of the magnet pole 3 to an engaging means 21 of the rotor slot 20. Evidently, different pole-locking devices with different lengths could be realised, so that any lock distance can be filled with an appropriate choice of pole-locking device.

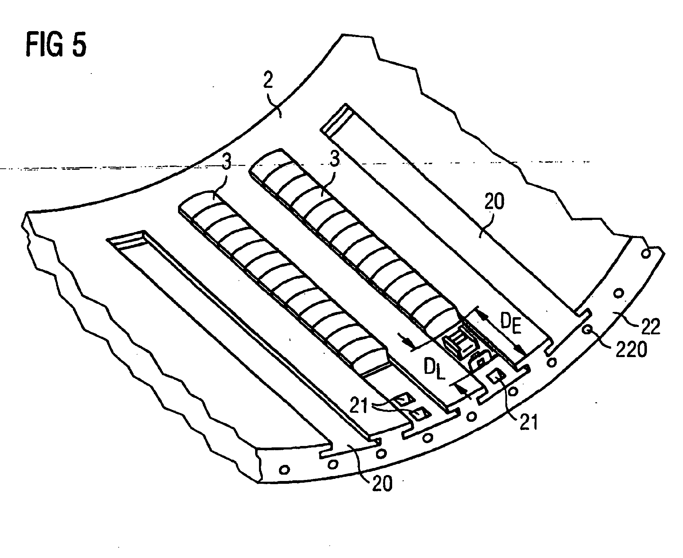

Fig. 5 shows a rotor 2 according to an embodiment of the invention. The rotor 2 has a plurality of T-shaped slots arranged along its inner surface. Magnet poles 3 inserted into these slots 20 will be separated from stator coils (not shown) by a narrow air gap. For design reasons, a portion D_{E} of the rotor slots 20 at the outer or brake-side 22 of the rotor 2 should remain empty, so that there is a distance between the brake disk and the magnet poles. A brake disk can later be applied to the brake-side 22 of the rotor 2 during a braking manoeuvre. To this end, the brake-disk side 22 of the rotor 2 comprises appropriate openings 220. To fill the gap in such a way that the magnet poles are prevented from slipping in an axial direction, i.e. parallel to an axis of rotation of the rotor 2, the rotor slots 20 are formed with recesses 21 shaped to accommodate a pole-locking device 1 according to the invention. Depending on the length of the magnet poles 3 used, pole-locking devices 1 with a suitable length D_{L} can be chosen and inserted into the rotor slots 20 to engage with corresponding engaging means 21, as described in Figs. 3 and 4 above.

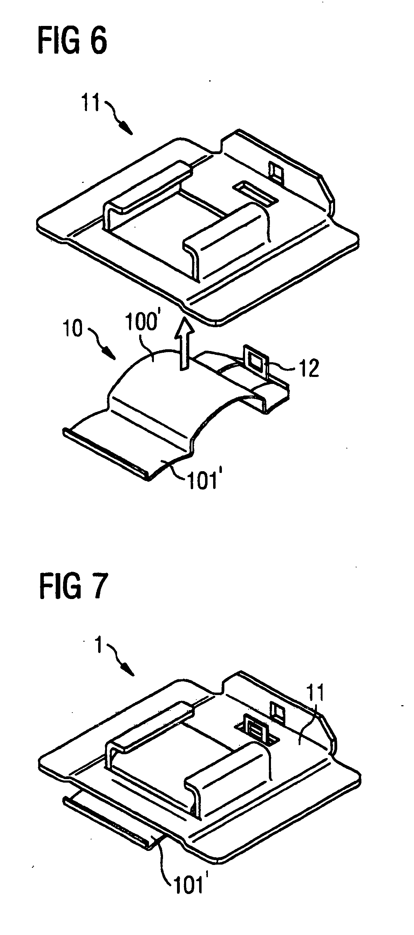

Fig. 6 shows a pole-locking device 1 according to a second embodiment of the invention in its unassembled state, with a housing frame 1 and a spring-loaded element 10. In this embodiment, the spring portion 100' comprises only one single 'bow' or 'wave'. Also, the exposed magnet side portion 101' is shaped in a slightly bowed or curved fashion, but to a lesser degree, so that this portion 101' can also be compressed to some extent when the magnet pole presses against the locking device 1. The same applies to the portion at the anchor element end. In this way, even this simpler shape for the spring-loaded element 10 can deliver favourable compression behaviour and may be simpler to manufacture and more resistant to breakage over time.

In Fig. 7, the pole-locking device 1 of Fig. 6 is shown in its assembled state. Again, the housing frame 11 is realised to expose the magnet side portion 101' of the spring-loaded element 10, and to protect an anchor element 12.

Although the present invention has been disclosed in the form of preferred embodiments and variations thereon, it will be understood that numerous additional modifications and variations could be made thereto without departing from the scope of the invention. For example, if the magnet poles are considerably shorter then the rotor slots, two or more pole-lockingpole-locking devices could be inserted into the empty length of the rotor slot, provided that there are sufficient recesses in the rotor slot for accommodating the anchors of the locking devices. In such an arrangement, the magnet side portion of the 'outer' pole-locking device (closest to the brake-side of the rotor) can press against the anchor shield of the inner pole-locking device (pressing against the magnet pole). To ensure a secure fit, the pole-locking devices can be shaped so that the anchor shield of an inner pole-locking device fits over a magnet side portion of an outer pole-locking device.

For the sake of clarity, it is to be understood that the use of "a" or "an" throughout this application does not exclude a plurality, and "comprising" does not exclude other steps or elements..

## Claims

1. A pole-locking device (1) for limiting the axial motion of a magnet pole (3) held in a field slot (20) of a field structure, (2) of an electrical machine, which: pole-locking device (1) comprises
- spring-loaded element (10) realised to exert an axial force (F) on the magnet pole (3) held in the field slot (2);
- a housing frame (11) realised to retain the spring-loaded element (10) in the field slot (2); and
- an anchor element (12) realised to anchor the pole-locking devise (1) in the field slot (2).

2. A pole-locking device according to claim 1, wherein the anchor element (12) is realised to engage with a corresponding engaging means (21) arranged in the field slot (20) .

3. A pole-locking device according to claim 2, wherein the housing frame (11) comprises an aperture (110) shaped to accommodate a spring portion (100, 100') of the spring-loaded element (10) such that the spring portion (100, 100') extends through the aperture (110).

4. A pole-locking device according to any of the preceding claims, wherein the housing frame (11) is realised to expose a magnet-side portion (101, 101') of the spring-loaded element (10), which portion (101, 101') is shaped to contact a magnet pole (3).

5. A pole-locking device according to any of the preceding claims, wherein the housing frame (11) comprises a retainer (111) for retaining the spring portion (100, 100') in the aperture (110).

6. A pole-locking device according to any of the preceding claims, wherein the housing frame (11) comprises an anchor slit (112) shaped to accommodate the anchor element (12).

7. A pole-locking device according to any of the preceding claims, wherein the anchor element (12) is realised as part of the spring-loaded element (10).

8. A pole-locking device according to any of the preceding claims, wherein a length of the spring-loaded element (10) in a compressed state corresponds to a lock distance (D_{L}) between the magnet pole (3) and the engaging means (21) of the field slot (20).

9. A pole-locking device according to any of the preceding claims, wherein the housing frame (11) is shaped according to a cross-section contour of the field slot (20).

10. A pole-locking device according to any of the preceding claims, wherein the anchor element (12) comprises a first access opening (120) for releasing the anchor element (12) from the engaging means (21).

11. A pole-locking device according to any of the preceding claims, comprising an anchor shield (13) realised to shield the anchor element (12).

12. A field structure (2) of an electrical machine, which field structure (2) comprises at least one field slot (20) realised to accommodate a magnet pole (3), wherein said field slot (20) comprises an engaging means (21) shaped to accommodate an anchor element (12) of a pole-locking device (1) according to any of claims 1 to 11.

13. A field structure according to claim 12, wherein an engaging means (21) comprises a recess (21) formed in a floor of the field slot (20).

14. An electrical machine comprising a field structure (2) according to claim 12 or claim 13, a magnet pole (3) arranged in a field slot (20) of the field structure (2), and a pole-locking device (1) arranged such that the anchor element (12) of the pole-locking device (1) engages with the engaging means (21) of the field slot (2).

15. An electrical machine according to claim 14, which electrical machine comprises a generator of a wind turbine.

## Patentansprüche

1. Polverriegelungsvorrichtung (1) zum Begrenzen der axialen Bewegung eines Magnetpols (3), der in einem Feldschlitz (20) einer Feldstruktur (2) einer elektrischen Maschine gehalten wird, wobei diese Polverriegelungsvorrichtung (1) umfasst:
- ein federbelastetes Element (10), das dafür ausgelegt ist, eine axiale Kraft (F) auf den Magnetpol (3) auszuüben, der in dem Feldschlitz (2) gehalten wird;
- einen Gehäuserahmen (11), der dafür ausgelegt ist, das federbelastete Element (10) in dem Feldschlitz (2) zu halten; und
- ein Verankerungselement (12), das dafür auslegt ist, die Polverriegelungsvorrichtung (1) in dem Feldschlitz (2) zu verankern.

2. Polverriegelungsvorrichtung nach Anspruch 1, wobei das Verankerungselement (12) dafür ausgelegt ist, mit einem entsprechenden Eingriffsmittel (21) in Eingriff zu gelangen, das in dem Feldschlitz (20) angeordnet ist.

3. Polverriegelungsvorrichtung nach Anspruch 2, wobei der Gehäuserahmen (11) eine Öffnung (110) umfasst, die dafür ausgebildet ist, einen Federabschnitt (100, 100') des federbelasteten Elements (10) aufzunehmen, sodass sich der Federabschnitt (100, 100') durch die Öffnung (110) hindurch erstreckt.

4. Polverriegelungsvorrichtung nach einem der vorhergehenden Ansprüche, wobei der Gehäuserahmen (11) dafür auslegt ist, einen magnetseitigen Abschnitt (101, 101') des federbelasteten Elements (10) freizulegen, wobei dieser Abschnitt (101, 101') dafür ausgebildet ist, mit einem Magnetpol (3) in Kontakt zu kommen.

5. Polverriegelungsvorrichtung nach einem der vorhergehenden Ansprüche, wobei der Gehäuserahmen (11) einen Halter (111) zum Festhalten des Federabschnitts (100, 100') in der Öffnung (110) umfasst.

6. Polverriegelungsvorrichtung nach einem der vorhergehenden Ansprüche, wobei der Gehäuserahmen (11) einen Ankerschlitz (112) umfasst, der dafür ausgebildet ist, das Verankerungselement (12) aufzunehmen.

7. Polverriegelungsvorrichtung nach einem der vorhergehenden Ansprüche, wobei das Verankerungselement (12) als ein Teil des federbelasteten Elements (10) ausgeführt ist.

8. Polverriegelungsvorrichtung nach einem der vorhergehenden Ansprüche, wobei eine Länge des federbelasteten Elements (10) in einem zusammengedrückten Zustand einem Verriegelungsabstand (D_{L}) zwischen dem Magnetpol (3) und dem Eingriffsmittel (21) des Feldschlitzes (20) entspricht.

9. Polverriegelungsvorrichtung nach einem der vorhergehenden Ansprüche, wobei der Gehäuserahmen (11) entsprechend einer Querschnittkontur des Feldschlitzes (20) geformt ist.

10. Polverriegelungsvorrichtung nach einem der vorhergehenden Ansprüche, wobei das Verankerungselement (12) eine erste Zugangsöffnung (120) zum Lösen des Verankerungselements (12) von dem Eingriffsmittel (21) umfasst.

11. Polverriegelungsvorrichtung nach einem der vorhergehenden Ansprüche, welche einen Ankerschirm (13) umfasst, welcher dafür ausgelegt ist, das Verankerungselement (12) abzuschirmen.

12. Feldstruktur (2) einer elektrischen Maschine, wobei diese Feldstruktur (2) mindestens einen Feldschlitz (20) umfasst, der dafür ausgelegt ist, einen Magnetpol (3) aufzunehmen, wobei der Feldschlitz (20) ein Eingriffsmittel (21) umfasst, das dafür ausgebildet ist, ein Verankerungselement (12) einer Polverriegelungsvorrichtung (1) nach einem der Ansprüche 1 bis 11 aufzunehmen.

13. Feldstruktur nach Anspruch 12, wobei ein Eingriffsmittel (21) eine Vertiefung (21) umfasst, die in einem Boden des Feldschlitzes (20) ausgebildet ist.

14. Elektrische Maschine, welche umfasst: eine Feldstruktur (2) nach Anspruch 12 oder Anspruch 13, einen Magnetpol (3), der in einem Feldschlitz (20) der Feldstruktur (2) angeordnet ist, und eine Polverriegelungsvorrichtung (1), die so angeordnet ist, dass das Verankerungselement (12) der Polverriegelungsvorrichtung (1) mit dem Eingriffsmittel (21) des Feldschlitzes (2) in Eingriff gelangt.

15. Elektrische Maschine nach Anspruch 14, wobei diese elektrische Maschine einen Generator einer Windenergieanlage umfasst.

## Revendications

1. Dispositif de blocage de pôle (1) pour limiter le mouvement axial d'un pôle magnétique (3) maintenu dans une fente de champ (20) d'une structure de champ (2) d'une machine électrique, lequel dispositif de blocage de pôle (1) comprend
- un élément chargé par ressort (10) exécuté pour exercer une force axiale (F) sur le pôle magnétique (3) maintenu dans la fente de champ (2) ;
- un cadre formant logement (11) exécuté pour retenir l'élément chargé par ressort (10) dans la fente de champ (2) ; et
- un élément d'ancrage (12) exécuté pour ancrer le dispositif de blocage de pôle (1) dans la fente de champ (2).

2. Dispositif de blocage de pôle selon la revendication 1, dans lequel l'élément d'ancrage (12) est exécuté pour se mettre en prise avec un moyen d'engagement (21) correspondant qui se trouve dans la fente de champ (20).

3. Dispositif de blocage de pôle selon la revendication 2, dans lequel le cadre formant logement (11) comprend une ouverture (110) dont la forme permet de recevoir une partie de ressort (100, 100') de l'élément chargé par ressort (10) de telle sorte que la partie de ressort (100, 100') s'étende à travers l'ouverture (110).

4. Dispositif de blocage de pôle selon l'une quelconque des revendications précédentes, dans lequel le cadre formant logement (11) est exécuté pour exposer une partie côté aimant (101, 101') de l'élément chargé par ressort (10), laquelle partie (101, 101') a une forme lui permettant d'entrer en contact avec un pôle magnétique (3).

5. Dispositif de blocage de pôle selon l'une quelconque des revendications précédentes, dans lequel le cadre formant logement (11) comprend un élément de retenue (111) pour retenir la partie de ressort (100, 100') dans l'ouverture (110).

6. Dispositif de blocage de pôle selon l'une quelconque des revendications précédentes, dans lequel le cadre formant logement (11) comprend une fente d'ancrage (112) dont la forme permet de recevoir l'élément d'ancrage (12).

7. Dispositif de blocage de pôle selon l'une quelconque des revendications précédentes, dans lequel l'élément d'ancrage (12) est exécuté comme partie de l'élément chargé par ressort (10).

8. Dispositif de blocage de pôle selon l'une quelconque des revendications précédentes, dans lequel une longueur de l'élément chargé par ressort (10) dans un état comprimé correspond à une distance de blocage (D_{L}) entre le pôle magnétique (3) et le moyen d'engagement (21) de la fente de champ (20).

9. Dispositif de blocage de pôle selon l'une quelconque des revendications précédentes, dans lequel le cadre formant logement (11) a une forme coïncidant avec un contour de la section transversale de la fente de champ (20).

10. Dispositif de blocage de pôle selon l'une quelconque des revendications précédentes, dans lequel l'élément d'ancrage (12) comprend une première ouverture d'accès (120) pour libérer l'élément d'ancrage (12) du moyen d'engagement (21).

11. Dispositif de blocage de pôle selon l'une quelconque des revendications précédentes, comprenant un écran d'élément d'ancrage (13) exécuté pour protéger l'élément d'ancrage (12).

12. Structure de champ (2) d'une machine électrique, laquelle structure de champ (2) comprend au moins une fente de champ (20) exécutée pour recevoir un pôle magnétique (3), dans laquelle une fente de champ (20) comprend un moyen d'engagement (21) dont la forme permet de recevoir un élément d'ancrage (12) d'un dispositif de blocage de pôle (1) selon l'une quelconque des revendications 1 à 11.

13. Structure de champ selon la revendication 12, dans laquelle un moyen d'engagement (12) comprend un creux (12) formé dans un fond de la fente de champ (20).

14. Machine électrique comprenant une structure de champ (2) selon la revendication 12 ou la revendication 13, un pôle magnétique (3) disposé dans une fente de champ (20) de la structure de champ (2) et un dispositif de blocage de pôle (1) disposé de manière à ce que l'élément d'ancrage (12) de l'élément de blocage de pôle (1) se mette en prise avec le moyen d'engagement (21) de la fente de champ (2).

15. Machine électrique selon la revendication 14, laquelle machine électrique comprend un générateur d'éolienne.
